# EUROPEAN PATENT SPECIFICATION

(11) **EP 2 175 145 B1**
(45) Date of publication and mention of the grant of the patent: **27.03.2013**
(21) Application number: 08017718.1
(22) Date of filing: 09.10.2008
(51) Int. Cl.: A47B 57/54, A47F 5/14, F16B 12/40

(54) **Lock and connection device for fixing the rods of two distinct frames in a reciprocal position**
Feststell- und Verbindungsvorrichtung zur Befestigung der Stäbe von zwei verschiedenen Rahmen in einer reziproken Position
Dispositif de verrouillage et de connexion pour fixer les barres de deux cadres différents dans une position réciproque

(43) Date of publication of application: 14.04.2010
(73) Proprietor: VIBO S.p.A., 36070 Trissino (VI) (IT)
(72) Inventor: Bonin, Franco, 36072 Chiampo (VI) (IT)
(74) Representative: Fuochi, Riccardo

(56) References cited:
- EP-A1- 0 351 735
- DE-A1-102005 009 171
- DE-A1-102005 026 666
- FR-A- 1 261 347
- FR-A1- 2 492 912
- GB-A- 2 423 275
- GB-A- 2 445 928
- US-A- 5 549 407
- US-B1- 6 619 877

## Description

### BACKGROUND of the INVENTION.

The present invention relates to a lock and connection device for fixing the rods of two distinct frames in a reciprocal position, chosen from a plurality of possible reciprocal positions, according to the preamble of claim 1.

To place objects inside a wardrobe, besides well-known fixed shelves, more modern but complex structures are used obtained by combining, in a modular way depending on the characteristics of the objects to be placed, elementary structures such as, e.g., trays, baskets, supporting shelves and the like.

In the technical field involving the present invention, such elementary structures for placing objects are typically supported by a first frame which has a number of rods, which is connected to a second frame, also having a number of rods and which in turn is connected in a fixed way to the walls of the wardrobe compartment.

The two frames are connected together, by means of the respective rods, in a reciprocally movable way, so that by moving them reciprocally, a plurality of possible reciprocal positions exist between the two frames. In this way it is for example possible to adapt the assembly, consisting of the two frames, to the respective different widths of the various compartments of the various wardrobes, which advantageously allows using these same two frames for a large number of different wardrobes which differ the one from the other in terms of the dimensions of their inner compartments.

### PREVIOUS STATE OF THE ART.

The Italian patent application nr. MO2004A000125 of the applicant shows a lock and connection device that allows fixing the rods of the first frame and the rods of the second frame in a determinate reciprocal position.

According to this document, the rods of the second frame accommodate the rods of the first frame sliding within them and the plurality of said reciprocal possible positions is given by all the intermediate positions together comprised between a first limit position corresponding to the situation of minimum length of the assembly made up of the two frames, in which the rods of the first frame are completely accommodated within the rods of the second frame, and a second limit position of maximum length of the assembly made up of the two frames, in which the rods of the first frame are accommodated, within the rods of the second frame, to the extent strictly necessary to make the connection between the two frames. By making the rods of the first frame and those of the second frame reciprocally move, the length of the assembly made up of the two frames can be made to adapt from time to time to the size of the wardrobe compartment.

Such a reciprocal position is fixed by means of stop screws, which prevent any further reciprocal movement.

This document however simply envisages a solution in case of reciprocal positions between the frames, and therefore between the respective rods, which are obtained by means of the reciprocal movement of the frames, and therefore of the rods.

A further example of a lock and connection device is disclosed in GB 2 445 928 A.

### AIM OF THE INVENTION.

The aim behind the present invention is therefore to develop a lock and connection device for fixing the rods of two distinct frames in a reciprocal position which is an alternative to the known state of the art solution, as regards the movements, and which in a comparative example also allows, in addition to what it has been possible to do thus far, fixing the rods of the two frames in a reciprocal position even when these have been made to rotate reciprocally in a common plane.

This aim is achieved by a lock and connection device having the characteristics of the claim 1.

The technical problems to be overcome that is, fixing in the reciprocal position obtained by movement is ingeniously envisaged according to the present invention, wherein several operating capacities are attributed at the same time to the two parts making up the connection and lock device according to the invention, all of which however aimed at fixing in position the two frames, and therefore the two respective rods of these, and all startable with the same movement, i.e. the reciprocal rotation of the two parts by means of the manual action of the user.

Thanks to the variety of applications and versatility of the lock and connection device according to the invention, it will be the use of the device in the single different cases of application that determines its specific usefulness, making it possible to exploit from among all the available operating capacities those of use in the specific case of application.

The claim 1 concerns an embodiment of the lock and connection device according to the invention, suitable in particular to the case in which the various reciprocal positions of the two frames are obtained by reciprocal movement.

In this case, the specific operating capacity, which is started by means of the reciprocal rotation of the two parts making up the lock and connection device according to the invention, is provided by the stretching apart of the two elastic fins which thus block and prevent any further reciprocal sliding between the rods of the two frames.

The claims from 2 to 3 concern advantageous upgradings of this embodiment of the lock and connection device according to the invention.

The claims from 7 to 11 advantageously concern upgradings of this second embodiment of the lock and connection device according to the invention.

### BRIEF DESCRIPTION OF THE DRAWINGS.

Further characteristics and advantages of the invention will become clearer from the description of an embodiment of a lock and connection device according to the invention, shown indicatively on the attached drawings in which:
the figure 1 shows in perspective view a complex structure for placing the objects for which the embodiment can be used of the lock and connection device according to the invention,
the figures 2 and 3 show in cross section and front view, the embodiment of the lock and connection device according to the invention,
the figure 4 shows a view of the embodiment of the lock and connection device oriented in the way it is fitted in the complex structure of figure 1,
the figures 5, 6 and 7 show the front view, from above and side respectively of a component of the embodiment of the lock and connection device according to the invention,
the figure 8 shows the view from above of a further component of the embodiment of the lock and connection device according to the invention,
the figure 9 shows the embodiment of the lock and connection device in its operating position and after having removed it, for convenience of representation, from the complex structure of figure 1,
the figures 10 and 11 show, in two differently rotated reciprocal positions of the two frames, a comparative example of a lock and connection device to the invention,
the figure 12 shows, in a perspective representation and alone, the comparative example of a lock and connection device of figures 10 and 11.

### EMBODIMENT OF THE INVENTION.

With reference to the figures, two lock and connection devices have been indicated by 1a and 1b. The letter a distinguishes the elements of the embodiment according to the present invention and the letter b the elements of a comparative example.

The purpose of this lock and connection device 1a; 1b is to fix in a reciprocal position, chosen from a plurality of possible reciprocal positions, the rods 2a, 3a; 2b, 3b of two distinct frames, specifically the rods 2a, 2b of a first frame and the rods 3a, 3b of a second frame. The first of these frames acts as a support for a structure for placing objects 4a; 4b while the second is connected, if necessary also indirectly, to the side walls of a wardrobe.

The lock and connection device is in two parts 5a, 6a or 5b, 6b suitable for being reciprocally rotated by means of the manual action of a user.

The reciprocal rotation of the two parts 5a, 6a or 5b, 6b determines the fixing of the rods 2a, 3a or 2b, 3b of the two frames in the reciprocal position in which they find themselves.

The above characteristics allow fixing the rods 2a, 3a or 2b, 3b in their reciprocal position, both in the event of their having been reciprocally translated and in the case of their having been reciprocally rotated.

The figures from 1 to 9 more specifically concern the embodiment 1a of the lock and connection device according to the invention, suitable in particular for the case in which the rods 2a, 3a are in a reciprocal position obtained by accommodating the rods 3a of the second frame in the rods 2a of the first frame and making these reciprocally move.

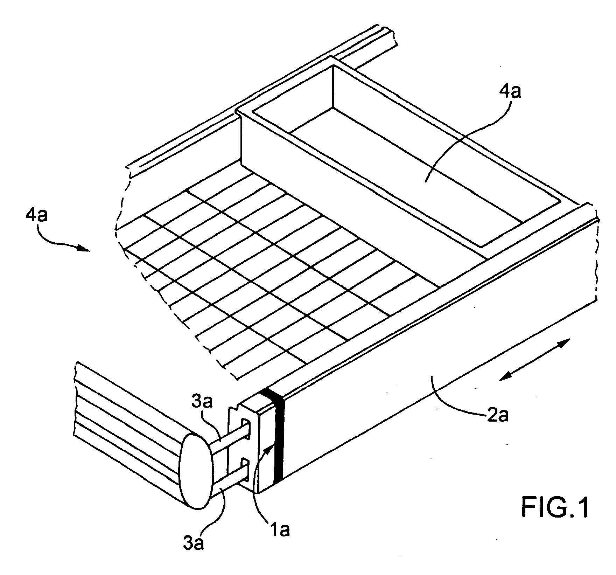

In the figure 1 are recognisable the rods 2a of the first frame, the one that supports the elementary structures for placing the objects such as, e.g., those illustrated, a tray and a bar basket shown in an interrupted way. Into the rods 2a are fitted the rods 3a of the second frame, the one connected to the walls of the wardrobe, e.g., as in the figure 1 to a structure not shown in detail connected in turn to the wardrobe, this not being represented either. The rods 3a can slide inside the rods 2a in the two directions indicated by the double arrow. The fixing in a reciprocal position is done by the first embodiment 1a of the lock and connection device, which in this figure has only been outlined inasmuch as it is located inside the rod 2a.

The next figures from 2 to 9 show this embodiment 1a in greater detail.

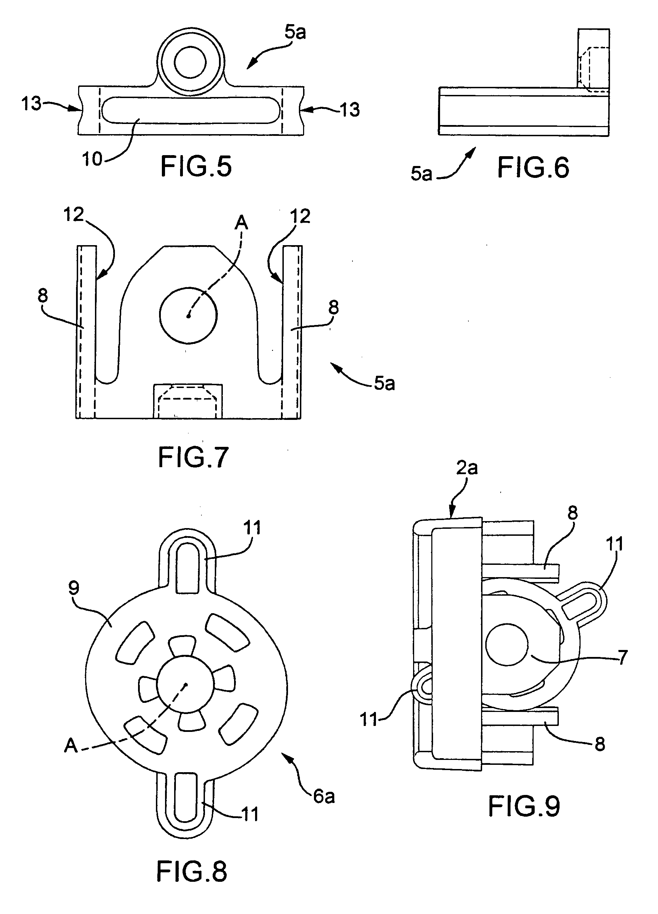

The first part 5a shows a central body 7 and two elastic fins 8. The elastic fins 8 are arranged at the two sides of the central body 7 and are connected to this central body 7 at one of their extremities, as can be seen from the figure 7. The second part 6a is on the other hand made up of a cam element 9, visible in particular in the figure 8, which in fitted position is located between the two elastic fins 8 and is supported on the central body 7 in a rotating way with respect to the central body 7. The central body 7 opportunely has a substantially flat shape and a slot 10, within which is supported the cam element 9 which is opportunely in the shape of an oval disc having protruding appendices 11 jutting out from this.

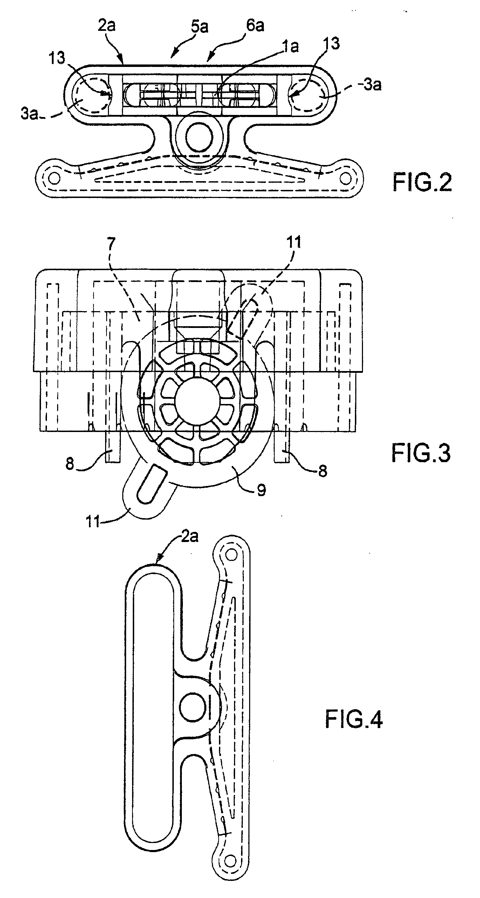

The figure 9 allows understanding in a particularly clear way the operation of this embodiment 1a of the lock and connection device according to the invention. It is fitted in the rod 2a with the orientation drawn in the figure 4. By acting manually on the second part 6a, i.e., on the cam element 9 or rather the oval disc and more precisely on its appendices 11, the user makes the second part 6a rotate with respect to the first part 5a, or to the central body 7.

This rotation occurs around a rotation axis A, which is opportunely perpendicular to the main symmetry plane of the oval disc 9, and the contact between the second part 6a, i.e., the cam element 9, and the elastic fins 8, which occurs following said rotation, results in the fins 8 divaricating. By effect of this divaricating action, the fins 8 come into contact with the rods 3a of the second frame and block these, preventing any further reciprocal sliding between the rods 2a and the rods 3a.

To improve the blocking effect, the elastic fins 8 have, on the inside turned towards the slot 10, first longitudinal grooves 12, within which rolls the edge of the oval disc 9, and on the outside turned towards the rods 3a of the second frame second longitudinal grooves 13, by means of which, at the moment of divaricating, they adhere to the rods 3a of the second frame.

The figures from 10 to 13 more specifically concern a comparative example 1b of a lock and connection device suitable in particular in case the rods 2b, 3b are in a reciprocal position obtained by causing the rods 2b of the first frame to turn around a horizontal rotation axis B with respect to the rods 3b of the second frame.

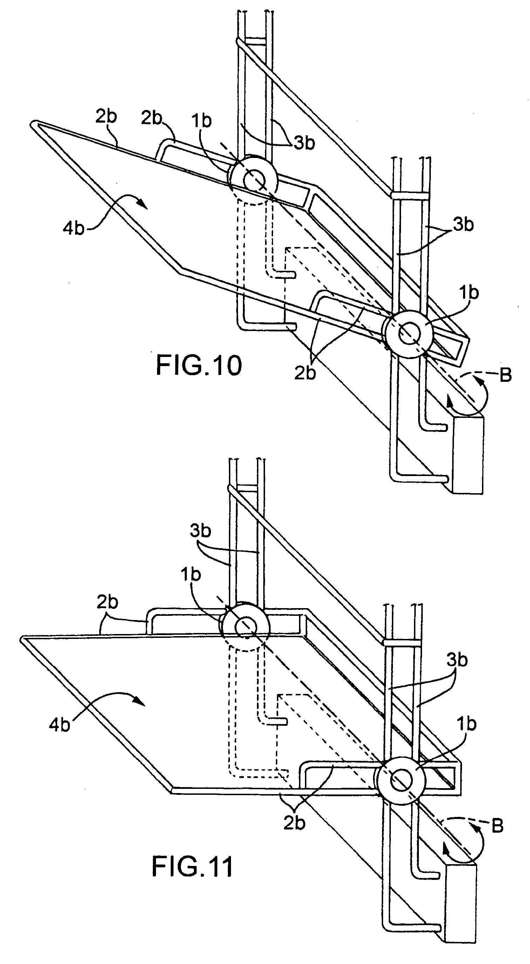

In the figures 10 and 11 are recognisable the rods 2b of the first frame, to which is supported by way of example a supporting shelf 4b, e.g., for shoes. The rods 2b are turned at right angles in the figure 11 and at an acute angle in the figure 10 with respect to the rods 3b of the second frame, which is connected to a structure not represented in detail connected in turn to the wardrobe, this not shown either. The rods 3b can be rotated with respect to the rods 2b in the two directions indicated by the double curve arrow. Fixing in position is done by the second embodiment 1b of the lock and connection device, which in these figures 10 and 11 has only been outlined.

The subsequent figures from 12 to 13 show this comparative example 1b in greater detail.

In the case in which the two frames are reciprocally turned by a right angle, or in the case in which the two frames are reciprocally turned by an acute angle, the first part 5b has first inner housings 14 for the rods 2b of the first frame and the second part 6b has inner housings 15 for the rods 3b of the second frame.

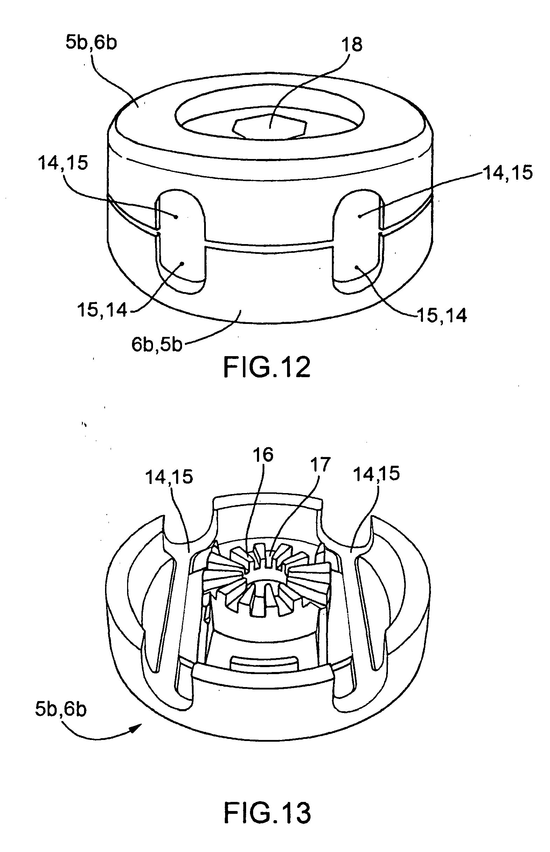

The two parts 5b, 6b are identical, as has been shown in the figure 13. This way, each of them can act indifferently both as first part 5b and second part 6b, as has been shown for example in the figure 12, in which, when the part, which in the figure is on top, acts as first part 5b the inner housings it has act as first inner housings 14 and when it acts as second part 6b its inner housings act as second inner housings 15 and vice versa. The same goes for the part which in the figure 12 is underneath.

Coupling means are also envisaged, to join in a blocked way in a reciprocal position the two parts 5b, 6b. These coupling means are suitably-geometric coupling means.

A possible example of these coupling means is shown in the figure 13. According to this, these are composed of a plurality of shaped elements 16 arranged on the inner side of the respective part 5b, 6b, among which 16 are free spaces 17 having the same shape as the shaped elements 16. In this case, at the moment of joining the two parts 5b, 6b the shaped elements 16 of a part 5b, 6b can fit into the free spaces 17 of the other part 6b, 5b and vice versa. The two parts 5b, 6b remain in position reciprocally rotated by effect of this reciprocal engagement between the shaped elements 16 of the two parts 5b, 6b.

The shaped elements 16 and the free spaces 17 extend opportunely along radial lines, so as to create an overall structure with geometric coupling which is symmetric.

Finally, it is again envisaged that the coupling means also comprise a stop screw 18, only outlined in the figures, which secures together the parts 5b, 6b after they have been joined.

To fix in position the respective rods 2b, 3b of the two frames, proceed as follows.

Manually arrange the first frame in the desired position rotated with respect to the second frame. Fit a first half 5b of the lock and connection device on the rods 2b of the first frame, inserting the rods in the specific first inner housings 14. Afterwards, fit the second half 6b of the lock and connection device on the opposite side, inserting the rods 3b of the second frame in the second inner housings 15 of the second part 6b.

By then pressing the two parts 5b, 6b one against the other, the shaped elements 16 of one part are fitted in the free spaces 17 of the other part and vice versa. Thanks to the symmetric structure of the coupling means, this push operation is always allowed in any rotated position of the two frames.

Finally, the stop screw 18 is fitted that prevents the disengagement of the shaped elements 16 of the two parts 5b, 6b following a reciprocal removal movement along the direction of the axis B.

From what has been said, the extreme versatility and adaptability appears clear of the lock and connection device according to the invention to fix the rods of two distinct frames in any reciprocal position, obtainable by reciprocal translation.

## Claims

1. Lock and connection device (1a) for fixing rods (2a,3a) of two distinct frames in a reciprocal position, chosen from a plurality of possible reciprocal positions, the first frame of which acts as a support for a structure for placing objects (4a) and the second frame is connected, if necessary also indirectly, to the side walls of a wardrobe, comprising said rods (2a,3a) and being composed of two parts (5a, 6a) suitable for being reciprocally rotated by means of the manual action of a user, the reciprocal rotation of the two parts (5a,6a) determining the fixing of the rods (2a, 3a) of the two frames in said reciprocal position,
**characterized by the fact tha**t said plurality of possible reciprocal positions is obtained by accomodating the rods (3a) of the second frame in the rods (2a) of the first frame and making them reciprocally move,
said first part (5a) has a central body (7) and two elastic fins (8), arranged at the two sides of the central body (7) and connected to this (7) at one of their extremities, and
said second part (6a) is made up of a cam element (9) which is located between the two elastic fins (8) and is supported on the central body (7) in a rotating way with respect to the central body (7), the elastic fins (8) being divaricated by the contact between said cam element (9) and said elastic fins (8) which occurs following the rotation of said cam (9) around a rotation axis (A),
wherein said central body (7) has a substantially flat shape and a slot (10), within which is supported the cam element (9) which is in the shape of an oval disc having protruding appendices (11) jutting out from this, said rotation axis (A) being perpendicular to the main symmetry plane of the oval disc (9),
by the effect of said divaricating action said fins (8) come into contact with the rods (3a) of said second frame and block these, preventing any further reciprocal sliding between said rods (2a) and said rods (3a), said rotation being determined by the manual action of the user on the cam element (9).

2. Lock and connection device according to claim 1, wherein said elastic fins (8) have on the inside turned towards the slot (10) first longitudinal grooves (12) within which rolls the edge of the oval disc (9).

3. Lock and connection device according to claim 1 or 2, wherein said elastic fins (8) have on their outside turned towards the rods (3a) of the second frame second longitudinal grooves (13), by means of which, at the moment of divaricating, they adhere to the rods (3a) of the second frame.

## Patentansprüche

1. Verriegelungs- und Verbindungsvorrichtung (1a) zum Feststellen der Stangen (2a, 3a) von zwei verschiedenen Rahmen in einer aus einer Vielzahl von möglichen gegenseitigen Lagen ausgewählten gegenseitigen Lage, wobei der erste dieser Rahmen als Stütze für eine Konstruktion zum Anordnen von Gegenständen (4a) dient und der zweite Rahmen, erforderlichenfalls auch indirekt, mit den Seitenwänden eines Kleiderschranks verbunden ist, welche diese Stangen (2a, 3a) beinhaltet und aus zwei Teilen (5a, 6a) besteht, die durch die manuelle Betätigung eines Benutzers gegenseitig verdreht werden können, wobei die gegenseitige Verdrehung der zwei Teile (5a, 6a) die Feststellung der Stangen (2a, 3a) der zwei Rahmen in der gegenseitigen Lage bedingt,
**dadurch gekennzeichnet, dass** die Vielzahl von möglichen gegenseitigen Lagen erhalten wird, indem die Stangen (3a) des zweiten Rahmens in den Stangen (2a) des ersten Rahmens untergebracht und in gegenseitige Bewegung versetzt werden,
wobei das erste Teil (5a) einen zentralen Körper (7) und zwei elastische Lamellen (8) aufweist, die auf den zwei Seiten des zentralen Körpers (7) angeordnet und an einem ihrer Enden mit diesem Körper (7) verbunden sind, und
wobei das zweite Teil (6a) aus einem Nockenelement (9) besteht, das sich zwischen den zwei elastischen Lamellen (8) befindet und drehbar zum zentralen Körper (7) auf dem zentralen Körper (7) gelagert ist, wobei die elastischen Lamellen (8) durch den Kontakt zwischen dem Nockenelement (9) und den elastischen Lamellen (8) gespreizt werden, der im Anschluss an die Drehung des Nockens (9) um eine Drehachse (A) eintritt,
wobei der zentrale Körper (7) eine im Wesentlichen flache Form und einen Schlitz (10) aufweist, in dem das Nockenelement (9) gelagert ist, das die Form einer ovalen Scheibe mit vorstehenden Ansätzen (11) hat, die von ihr abstehen, wobei die Drehachse (A) senkrecht zur Hauptsymmetrieebene der ovalen Scheibe (9) ist,
wobei die Lamellen (8) aufgrund der Spreizeinwirkung in Kontakt mit den Stangen (3a) des zweiten Rahmens kommen und diese blockieren, wodurch sie jedes weitere gegenseitige Gleiten zwischen diesen Stangen (2a) und den Stangen (3a) verhindern, wobei die Drehung durch die manuelle Betätigung des Nockenelements (9) durch den Benutzer bedingt wird.

2. Verriegelungs- und Verbindungsvorrichtung nach Anspruch 1, wobei die elastischen Lamellen (8) auf der zu dem Schlitz (10) gerichteten Innenseite erste Längsnuten (12) aufweisen, in denen der Rand der ovalen Scheibe (9) rollt.

3. Verriegelungs- und Verbindungsvorrichtung nach Anspruch 1 oder 2, wobei die elastischen Lamellen (8) auf ihrer zu den Stangen (3a) des zweiten Rahmens gerichteten Außenseite Längsnuten (13) aufweisen, mittels derer sie im Moment des Spreizens an den Stangen (3a) des zweiten Rahmens haften.

## Revendications

1. Dispositif de connexion et verrouillage (1a) pour fixer les tiges (2a,3a) de deux châssis distincts dans une position réciproque, sélectionnée parmi une pluralité de position réciproques possibles, où le premier châssis agit comme un support pour une structure pour placer des objets (4a) et le deuxième châssis est connecté, si nécessaire même indirectement, aux parois latérales d'une armoire, comprenant lesdites tiges (2a, 3a) et étant composé de deux parties (5a,6a) adaptées pour être tournées réciproquement par le biais de l'action manuelle d'un utilisateur, la rotation réciproque des deux parties (5a, 6a) entraînant la fixation des tiges (2a,3a) des deux châssis dans ladite position réciproque,
**caractérisé en ce que** ladite pluralité de positions réciproques possibles est obtenue en recevant les tiges (3a) du deuxième châssis dans les tiges (2a) du premier châssis et en rendant possible de les déplacer réciproquement,
ladite première partie (5a) a un corps central (7) et deux ailettes élastiques (8), disposées sur les deux côtés du corps central (7) et connectées à celui-ci (7) à une de leurs extrémités, et
ladite deuxième partie (6a) est constituée par un élément de came (9) qui est situé entre les deux ailettes élastiques (8) et est supporté sur le corps central (7) d'une manière rotative par rapport au corps central (7), les ailettes élastiques (8) étant écartées par le contact entre ledit élément de came (9) et lesdites ailettes élastiques (8) qui se produit à la suite de la rotation de ladite came (9) autour d'un axe de rotation (A),
dans lequel ledit corps central (7) a une forme sensiblement plate et une fente (10), dans laquelle est supporté l'élément de came (9) qui est sous la forme d'un disque ovale ayant des appendices en saillie (11) faisant saillie de celui-ci, ledit axe de rotation (A) étant perpendiculaire au plan de symétrie principal du disque ovale (9),
sous l'effet dudit écartement, lesdites ailettes (8) viennent en contact avec les tiges (3a) dudit deuxième châssis et les bloquent, empêchant tout coulissement réciproque ultérieur entre lesdites tiges (2a) et lesdites tiges (3a), ladite rotation étant provoquée par l'action manuelle de l'utilisateur sur l'élément de came (9).

2. Dispositif de connexion et verrouillage selon la revendication 1, dans lequel lesdites ailettes élastiques (8) comportent, sur l'intérieur orienté vers la fente (10), des premières rainures longitudinales (12) dans lesquelles roule le bord du disque ovale (9).

3. Dispositif de connexion et verrouillage selon la revendication 1 ou 2, dans lequel lesdites ailettes élastiques (8) comportent, sur leur extérieur orienté vers les tiges (3a) du deuxième châssis, des deuxièmes rainures longitudinales (13), au moyen desquelles, au moment de l'écartement, elles adhèrent aux tiges (3a) du deuxième châssis.
